# EUROPEAN PATENT APPLICATION

(11) **EP 1 582 710 A1**
(43) Date of publication of application: **05.10.2005**
(21) Application number: 05102131.9
(22) Date of filing: 18.03.2005
(51) Int. Cl.: F01N 3/025, F01N 3/023, F02D 41/02, F02D 41/40

(54) **Control method for an exhaust gas purification system and an exhaust gas purification system**

(30) Priority: 30.03.2004 JP 2004098275
(71) Applicant: Isuzu Motors Limited, Tokyo 140-8722 (JP)
(72) Inventor: HASEYAMA, Takashi, c/o Isuzu Motors Limited, Kanagawa, Kanagawa (JP); MATSUNUMA, Atsushi c/o Isuzu Motors Limited, Kanagawa, Kanagawa (JP); WU, Wei, c/o Isuzu Motors Limited, Kanagawa, Kanagawa (JP); IWASHITA, Takuro, c/o Isuzu Motors Limited, Kanagawa, Kanagawa (JP); ONODERA, Takao, c/o Isuzu Motors Limited, Kanagawa, Kanagawa (JP); IKEDA, Shigeru, c/o Isuzu Motors Limited, Kanagawa, Kanagawa (JP)
(74) Representative: Weber, Dieter

(57) **Abstract**

The present invention concerns a exhaust gas purification system (1), provided with a continuous regeneration-type DPF device (13) having a filter (13b) for collecting PM in exhaust gas (G), provided in an exhaust gas passage (12) of an internal combustion engine (10) provided with an EGR system, for supplying unburned fuel to exhaust gas (G) flowing in the continuous regeneration-type DPF device (13) during the forced regeneration control for regenerating the filter (13b) by forcibly burning PM collected by the filter (13b),
characterized by stopping the recirculation of EGR gas (Ge) to the intake passage (14) side in the EGR system, when unburned fuel is supplied to exhaust gas (G) during the forced regeneration control.

This prevents the blocking of EGR passage (15) and the sticking of intake valve and so on, caused by the unburned fuel supplied into exhaust gas (G), during the forced regeneration control of the continuous regeneration-type DPF device (13). And this prevents engine troubles caused by these problems.

## Description

### BACKGROUND OF THE INVENTION

The present invention relates to an exhaust gas purification system that purifies particulate matters (PM) from the exhaust gas discharged by diesel and other internal combustion engines using a continuous regeneration-type diesel particulate filter (DPF) and also to a control method thereof.

In the same way as for NOx, CO, and also HC etc., restrictions on the volume of particulate matters (hereinafter "PM") discharged from diesel internal combustion engines grow severe every year. Techniques for collecting this PM in a filter known as a diesel particulate filter (hereinafter "DPF") and for reducing the quantity thereof by discharging externally have been developed.

DPFs for collecting this PM include a monolithic honeycomb form wall flow type filter made of ceramic, a fiber form type filter made of fiber shape ceramic or metal, and so on. An exhaust gas control system using these PDFs are installed on the way of the exhaust passage of an internal combustion engine, similarly to the other exhaust gas control systems, for cleaning exhaust gas generated in the internal combustion engine before discharging the same.

These DPF devices include a continuous regeneration-type DPF device wherein an oxidation catalyst is installed upstream of the DPF, a continuous regeneration-type DPF device wherein the PM combustion temperature is lowered by the effect of a catalyst supported on a filter with catalyst and PM is burned by the exhaust gas, etc.

The continuous regeneration-type DPF device wherein the oxidation catalyst is installed upstream of the DPF uses the fact that the oxidation of PM by NO₂ (nitrogen dioxide) is executed at a lower temperature than the temperature at which oxidizing PM by oxygen in the exhaust gas is executed. This DPF device is composed of an oxidation catalyst and a filter. NO (nitrogen monoxide) in the exhaust gas is oxidized to NO₂, by the action of an oxidation catalyst supporting platinum or the like on the upstream side. PM collected by the filter on the downstream side is oxidized by this NO₂ to CO₂ (carbon dioxide). Thereby, PM is removed.

Besides, the continuous regeneration-type DPF device of filter with catalyst is composed of a filter with catalyst such as cerium oxide (CeO₂). In this DPF device, PM is oxidized by a reaction (4CeO₂+C → 2Ce₂O₃ + CO₂, 2Ce₂O₃ + O₂ → 4CeO₂, etc.) using O₂ (oxygen) in the exhaust gas on the filter with catalyst, within the low temperature range (on the order of 300 °C to 600 °C). On the other hand, PM is oxidized by O₂ (oxygen) in the exhaust gas, within the high temperature range (equal or superior to the order of 600 °C) which is higher than the temperature where PM is burned with O₂ in the exhaust gas.

In this continuous regeneration-type DPF device of filter with catalyst, the oxidation catalyst is also installed on the upstream side. The installation of this oxide catalyst raises the filter inlet exhaust gas temperature, through oxidation reaction of unburned HC and CO in the exhaust gas, and stimulates oxidation and removal of PM. At the same time, this oxidation reaction prevents the emission of unburned HC and CO into the atmosphere.

Howsoever, these continuous regeneration-type DPF devices also causes the problem of exhaust pressure rise by the clogging of this filter. In other words, when the exhaust gas temperature is equal or superior to 350 °C, PM collected by this DPF is burned continuously and cleaned, and the DPF regenerates itself. However, in case of low exhaust gas temperature and in an operating condition of an internal combustion engine where the emission of NO is low, for example, in case where the low exhaust gas temperature state such as idling of internal combustion engine, low load/low speed operation continues, the oxidation reaction is not stimulated as the exhaust gas temperature is low, the catalyst temperature lowers and the catalyst is not activated and, moreover, NO lacks. Consequently, the aforementioned reaction does not occur and the filter can not be regenerated through oxidation of PM. As a result, PM continues to deposit in the filter and the filter clogging progresses.

As a measure against this filter clogging, it has been conceived to forcibly burn and remove the collected PM by forcibly raising the exhaust gas temperature, when the amount of clogging has exceeded a predetermined amount. As for means for detecting the filter clogging, there are some methods such as a method for detecting by the differential pressure across the filter, and a method for detecting through determination of the PM accumulation quantity by calculating the quantity of PM collected from the engine operation state from a predetermined map data. Besides, as means for exhaust gas temperature raising, there is a method by injection control of the injection in the cylinder, or a method by fuel control in the direct fuel injection in the exhaust pipe.

The cylinder injection control, in the case where the exhaust gas temperature is lower than the active temperature of an oxidation catalyst disposed in the upstream of the filter or supported on the filter, raises the exhaust gas temperature by executing multi injection (multi-stage injection). After the temperature raises higher than the active temperature, a post injection (post injection) is executed and then the unburned fuel in the exhaust gas is burned by the catalytic action of the oxidation catalyst. Thereby the filter is regenerated through burning and removing the collected PM by raising the exhaust gas temperature higher than a burning temperature of the PM collected in the filter.

That is, the cylinder injection control is a method in which the exhaust gas temperature after the oxidation catalyst is raised making oxidization activity of the oxidation catalyst itself progress by supplying unburned fuel to the oxidation catalyst.

Normally with these continuous regeneration-type DPF devices, when the collecting quantity of PM collected by the filter reaches a preset limit, the operating condition of the internal combustion engine is automatically changed to forced regeneration operation. In this forced regeneration operation, the exhaust gas temperature is forcibly raised and the quantity of NO and NO₂ is increased, as disclosed in Japanese patent application *Kokai* publication No. 2002-70535. Thereby, the collected PM is oxidized and removed from the filter to regenerate the filter.

Concerning this regeneration of the filer, for instance, as described in Japanese patent application *Kokai* publication No.2003-27921 and Japanese patent application *Kokai* publication No.2002-168112, an exhaust purification device for performing the recirculation control of EGR gas together with the aforementioned exhaust gas temperature elevation or the increase of quantity of NO and NO₂ is also proposed.

However, there following problems do exist. Exhaust gas during the forced regeneration control gets into the state in which it contains a large quantity of unburned fuel due to post injection, direct injection into the exhaust pipe and so on. A large quantity of unburned fuel flows in the EGR passage and the engine intake side passage when EGR gas, a part of exhaust gas, is caused to flow in the intake side, through the EGR system (exhaust gas recirculation system) when the EGR is performed during this exhaust gas is flowing in the exhaust pipe. As a result, the EGR passage may become blocked, an intake valve exposed in the intake port of the engine cylinder head may stick, and so on. Furthermore, these problems can cause engine troubles.

### BRIEF SUMMARY OF THE INVENTION

The present invention has the objective of providing a control method of exhaust gas purification system and an exhaust gas purification system which will allow the prevention of engine troubles caused by the aforementioned problems, by preventing the occurrence of the EGR passage becoming blocked, the intake valve sticking and so on, which are caused by the unburned fuel being supplied into exhaust gas, during the forced regeneration control of an continuous regeneration-type DPF device.

The control method of exhaust purification system of the present invention for use in attaining the aforementioned objective, provided with a continuous regeneration-type diesel particulate filter device having a filter for collecting particulate matters in exhaust gas in an exhaust gas passage of an internal combustion engine provided with a EGR system, for supplying unburned fuel to exhaust gas flowing in the continuous regeneration-type diesel particulate filter device during the forced regeneration control for regenerating the filter by forcibly burning particulate matters collected through the filter, characterized by stopping the recirculation of EGR gas to the intake passage side in the EGR system, when unburned fuel is supplied to exhaust gas during a forced regeneration control.

Moreover, the exhaust purification system of the present invention for use in attaining the aforementioned objective, provided with a continuous regeneration-type diesel particulate filter device having a filter for collecting particulate matters in exhaust gas in an exhaust gas passage of an internal combustion engine provided with the EGR system, and a forced regeneration means for supplying unburned fuel to exhaust gas flowing in the continuous regeneration-type diesel particulate filter device during forcible regeneration control for regenerating the filter by forcibly burning particulate matters collected through the filter, wherein the forced regeneration means controls to stop the recirculation of EGR gas to the intake passage side in the EGR system when unburned fuel is supplied to exhaust gas.

In the aforementioned exhaust purification system, the continuous regeneration-type diesel particulate filter device is one of a continuous regeneration-type diesel particulate filter device in which an oxidation catalyst is provided in the upstream of the filter, a continuous regeneration-type diesel particulate filter device in which an oxidation catalyst is supported on the filter, a continuous regeneration-type diesel particulate filter device in which a catalyst is supported on the filter and at the same time an oxidation catalyst is provided in the upstream of the filter, or a combination thereof.

In Accordance with the control method of exhaust purification system and the exhaust purification system of the present invention, the recirculation of EGR gas to the intake passage side of an engine is stopped, when unburned fuel is supplied to exhaust gas flowing in a continuous regeneration-type DPF filter device, in the forced regeneration for regenerating the filter by forcibly burning particulate matters collected by the filter of above-mentioned continuous regeneration-type DPF device.

Therefore, the EGR passage is prevented from being blocked and the inlet valves from sticking, and so on. Consequently, any engine trouble caused by that blocking and sticking can be prevented.

### BRIEF DESCRIPTION OF THE DRAWINGS

Fig. 1 is a systematic block diagram of the exhaust gas purification system according to an embodiment of the present invention.
Fig. 2 is a drawing showing the configuration of the control means for the exhaust gas purification system according to an embodiment of the present invention.
Fig. 3 is a drawing showing the regeneration control flow of the exhaust gas purification system according to an embodiment of the present invention.

### DETAILED DESCRIPTION OF THE INVENTION

Hereinafter, the preferred embodiments of the control method for an exhaust gas purification system and the exhaust gas purification system according to the present invention will be described with reference to the accompanying drawings. The following explanation will use the example of an exhaust gas purification system provided with a continuous regeneration-type DPF device comprising a combination of an oxidation catalyst and a filter with a catalyst.

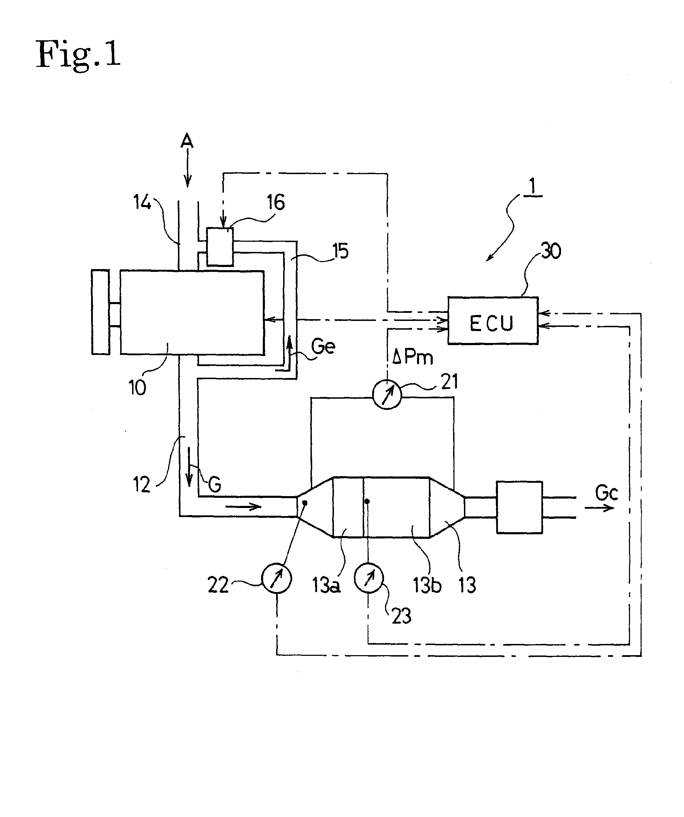

Fig. 1 shows a configuration of an exhaust gas purification system 1 for an internal combustion engine according to an embodiment of the present invention. A diesel engine 10 having the exhaust gas purification system 1 is provided with an EGR passage 15 having an EGR valve 16. This EGR passage is set from an exhaust passage 12 to an intake passage (inlet duct) 14. A continuous regeneration-type DPF device 13 is provided in the exhaust passage 12 of the diesel engine 10. This continuous regeneration-type DPF device 13 is configured with an oxidation catalyst (DOC) 13a on the upstream side thereof and a filter with catalyst (CSF) 13b on the downstream side thereof.

The oxidation catalyst 13a is formed so as to support an oxidation catalyst of platinum (Pt) etc. on a support with a ceramic honeycomb structure etc. The filter with catalyst 13b is formed of a monolithic honeycomb type, wall flow type filter with entrances and exits to channels in a porous ceramic honeycomb alternately closed or a felt-type filter with randomly layered alumina other inorganic fibers or the like etc. A catalyst of platinum or cerium oxide etc. is supported on this filter portion.

When a monolithic honeycomb type, wall flow type filter is used as the filter with catalyst 13b, the particulate matter (PM) contained in the exhaust gas is collected (trapped) in the porous ceramic walls. When a fabric type filter type is used, PM is collected in the inorganic fibers thereof.

A pressure difference sensor 21 is provided on the conduit tube before and behind the continuous regeneration-type DPF device 13 in order to estimate the collecting quantity of PM on the filter with catalyst 13b. For the purpose of regeneration control of the filter with catalyst 13b, furthermore, an oxidation catalyst inlet exhaust gas temperature sensor 22 and a filter inlet exhaust gas temperature sensor 23 are provided upstream of, between, and downstream of the oxidation catalyst 13a and the filter with catalyst 13b respectively.

The output values from these sensors are input to an engine control unit (ECU) 30. In addition to controlling the overall operation of the engine 10, the engine control unit 30 also controls the operation of the continuous regeneration-type DPF 13. The fuel injection devices (injection nozzles, not shown) of the engine 10, an EGR valve for controlling the amount of EGR gas of an EGR passage 15 and the like are controlled in accordance with the control signals output from this the engine control unit 30.

These fuel injection devices are connected to a common-rail fuel injection system storing temporarily the fuel pressurized by the fuel pump to high pressure. Further, for operating the engine, the engine speed signal from the engine speed sensor and the accelerator opening signal from the throttle opening sensor etc. are input into the engine control unit 30 together with other data such as a vehicle speed and cooling water temperature.

In this engine 10 and the exhaust gas purification system 1, intake air A enters in cylinders of engine 10 from the intake passage 14. Exhaust gas G is generated through combustion of mixture of fuel and intake air A in the cylinders. Part Ge of this exhaust gas G passes through the EGR valve 16 and the EGR passage 15, and recirculates to the intake passage 14. The remaining exhaust gas G passes through the exhaust gas purification device 13 in the exhaust passage 12 to be discharged as purified exhaust gas Gc.

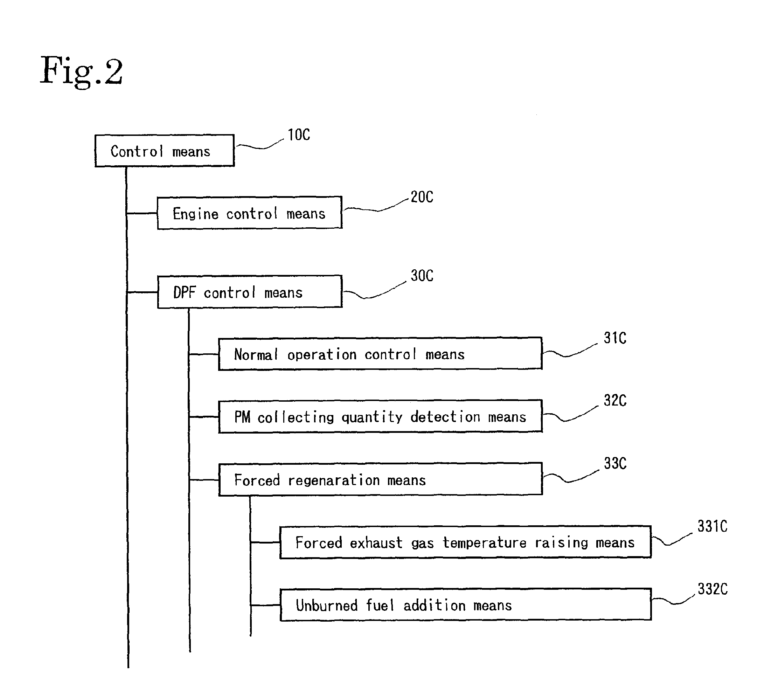

The composition of the control means of the exhaust gas purification system 1 shall now be described. In the present invention, as shown in Fig. 2, the control means 10C of the engine control unit 30 is composed of an engine control means 20C for controlling engine operation, a diesel particulate filter (DPF) control means 30C for the exhaust gas purification system 1 and so on. The DPF control means 30C is composed of a normal operation control means 31C, a PM collecting quantity detection means 32C, a forced regeneration means 33C and so on.

The normal operation detection means 31C performs normal operations to be carried out independently of the regeneration of the continuous regeneration-type DPF 13. And in that normal operation, a normal injection control is performed to inject a predetermined quantity of fuel from a fuel injection device, in accordance with a electric current time signal computed by control device 30 based on the accelerator opening and engine speed.

The PM collecting quantity detection means 32C is the means of detecting collecting quantity ΔPm of PM to be collected by filter with the catalyst 13b of the continuous regeneration-type DPF 13. Detection of this collecting quantity ΔPm is executed through the differential pressure before and behind of the continuous regeneration-type DPF device 13, the cumulative calculated value of the accumulated quantity inferred from engine speed or load, the cumulated time of the engine speed, and so on. In this embodiment, it is detected based on the differential pressure before and behind the continuous regeneration-type DPF device 13, namely, the measured value from the differential pressure sensor 21.

Though control is somewhat different according to the type of the continuous regeneration-type DPF 13, forced regeneration means 33C is composed of a forced exhaust gas temperature raising means 331C and an unburned fuel addition means 332C. This forced exhaust gas temperature raising means 331C raises the exhaust gas temperature to a predetermined temperature such as the active temperature of oxidation catalyst 13a, by performing multi injection (multistage injection) into the cylinders of engine 10.

The unburned fuel addition means 332C adds unburned fuel in exhaust gas, by performing post injection or the direct injection into the exhaust pipe, after the exhaust gas temperature raising. This unburned fuel is burned by the oxidation catalyst 13a and the filter inlet exhaust gas temperature is raised to the temperature that is between 500°C and 600°C, to realize such temperature and environment appropriate for oxidation and removal of PM. This filter inlet exhaust gas temperature is detected by a filter inlet exhaust gas temperature sensor 23. Then, the filter with catalyst 13b is regenerated forcibly, through a forced combustion removal of PM collected in the filter with catalyst 13b, by these both means 331C, 332C. An intake throttling is sometimes combined in the forced exhaust gas temperature raising means 331C.

Also, the DPF control means 30C with these various means is composed as means for sustaining the normal operation by the normal operation control means 31C and operating automatically the forced regeneration means 33C, based on the PM collecting quantity detected by the PM collecting quantity detection means 32C.

Then, in the present invention, the forced regeneration means 33C totally closes the EGR valve 16, when unburned fuel is added to exhaust gas G by the unburned fuel addition means 332C. This fully closing prevents EGR gas Ge from passing through the EGR passage 15 and flowing in the intake passage 14.

The EGR valve 15 is controlled by selecting a target EGR opening, based on the engine speed and engine load of engine 1, in a state where unburned fuel is not added by post injection or by direct injection into the exhaust pipe.

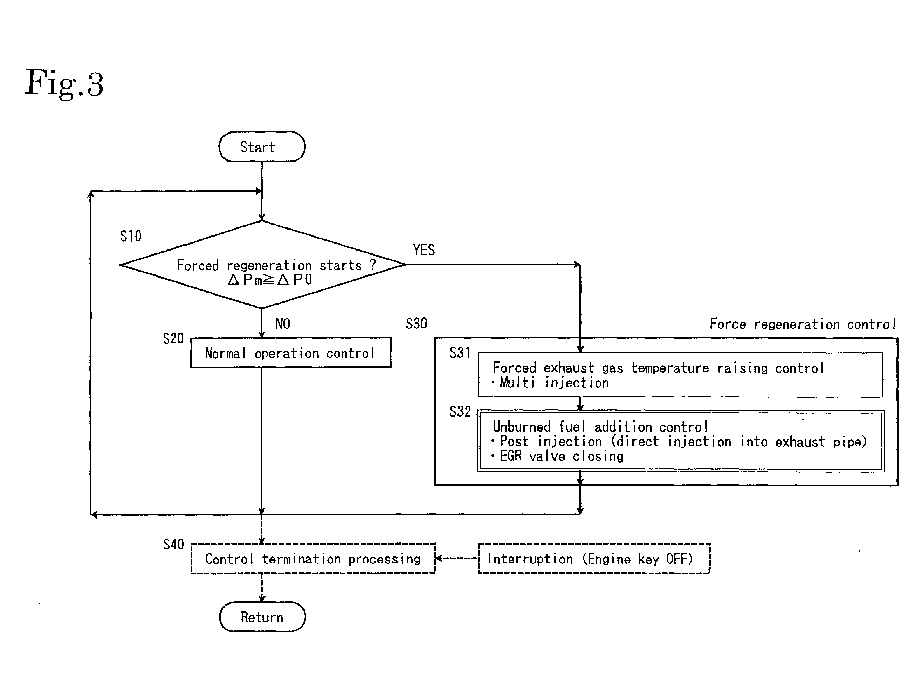

Now, the regeneration control of the exhaust gas purification system 1, more particularly, the operation of the forced regeneration means 33C executed by the DPF control means 30C shall be described. In this the exhaust gas purification system 1, the normal operation control is performed, PM is collected and, then, the forced regeneration control is performed when the PM collecting quantity reaches the limit, according to the control flow as illustrated in Fig. 3. The control flow show in this Fig. 3 is shown as a control flow which is called from a control flow controlling the whole engine to start, with the start of an engine by turning ON an engine key, executes the termination operation of the regeneration control, by turning OFF the engine key, returns to the control flow controlling the whole engine and terminates with the termination of this control flow.

As for the control of this Fig. 3, in the step S10, the PM collecting quantity detection means 32C judged if the PM collecting quantity is within a predetermined range, by determining if the differential pressure ΔPm detected by differential pressure sensor 21 is a determination differential pressure value ΔP0 or higher. In case where it is lower than the predetermined determination differential pressure value ΔP0, it is determined that the forced regeneration control is still unnecessary, and in the step S20, the normal operation by the normal operation control means 31C is performed for a predetermined period of time related with an interval for determining the start of the forced regeneration control. Otherwise, in case where it is the predetermined determination differential pressure value ΔP0 or higher, it is determined that the forced regeneration is necessary, and in the step S30, the forced regeneration operation by the forced regeneration means 33C is performed.

A control such as follows shall be performed, in the forced regeneration operation in this step S30. In the step S31, multi injection (multistage injection) is performed in the injection into the cylinders of engine 10, until the exhaust gas temperature rises up to a predetermined temperature such as the active temperature of the oxidation catalyst 13a, by the forced exhaust gas temperature raising means 331C. Thereafter, post injection or direct injection into the exhaust pipe is performed by the unburned fuel addition means 332C in the step S32. Thereby, the unburned fuel is burned by the oxidation catalyst 13a, by adding unburned fuel to exhaust gas. The filter inlet exhaust gas temperature is raised to the temperature between 500 °C and 600 °C by this combustion. Then, PM collected in the filter with catalyst 13b is burned and removed forcibly. In the present invention, the unburned fuel addition means 332C of this step S32 closes fully the EGR valve 16 and, thereby, the EGR gas Ge is prevented from passing through the EGR passage 15 and flowing in the intake pipe 14.

Then, this forced regeneration operation is sustained until a predetermined time which was set previously elapses, or, the differential pressure ΔPm detected by the differential pressure sensor 21 becomes the predetermined differential pressure value ΔP1 for regeneration termination or lower and then terminated. After this termination, it returns to the step S10.

While selecting either the normal operation control of the step S20 or the forced regeneration operation control of the step S30, according to the determination of this step S10, the normal operation and the forced regeneration operation are repeated. The engine 10 is operated, by this repeat. Besides, when detecting engine key OFF, an interruption is caused, to stop the control in respective steps. Then, at the step S40 regeneration termination operations for memorizing the state of the stop or others are performed before returning to the control flow for controlling the whole engine and the flow terminates.

Consequently, in accordance with this exhaust gas purification system 1, the recirculation of EGR gas Ge is stopped, when unburned fuel is supplied to exhaust gas G in the forced regeneration control for regenerating forcibly the filter with catalyst 13b by forcibly burning particulate matters collected by the filter with catalyst 13b. Therefore, blocking of the EGR passage 15, sticking of intake valve (inlet valve) and so on, caused by the inflow of this unburned fuel can be prevented. Moreover, engine troubles caused by these blocking and sticking can be prevented.

The above explanation deals with the example of a DPF device in the exhaust gas purification system realized as a continuous regeneration-type DPF device providing an oxidation catalyst on the upstream side of the filter while also making a catalyst supported on the filter; however, the present invention is not restricted to this embodiment. Furthermore, the continuous regeneration-type DPF device may also be of other types such as a continuous regeneration-type DPF device in which a filter only is provided, a continuous regeneration-type DPF device in which an oxidation catalyst is provided in the upstream of a filter, and a continuous regeneration-type DPF device in which an oxidation catalyst is supported on a filter.

## Claims

1. A control method of exhaust gas purification system, provided with a continuous regeneration-type diesel particulate filter device having a filter for collecting particulate matters in exhaust gas in an exhaust gas passage of an internal combustion engine provided with a EGR system, for supplying unburned fuel to exhaust gas flowing in said continuous regeneration-type diesel particulate filter device during said forced regeneration control for regenerating said filter by forcibly burning particulate matters collected through said filter,
**characterized by** stopping the recirculation of EGR gas to the intake passage side in said EGR system, when unburned fuel is supplied to exhaust gas during a forced regeneration control.

2. An exhaust gas purification system, provided with a continuous regeneration-type diesel particulate filter device having a filter for collecting particulate matters in exhaust gas in an exhaust gas passage of an internal combustion engine provided with said EGR system, and a forced regeneration means for supplying unburned fuel to exhaust gas flowing in said continuous regeneration-type diesel particulate filter device during forced regeneration control for regenerating said filter by forcibly burning particulate matters collected through said filter,
wherein said forced regeneration means controls to stop the recirculation of EGR gas to the intake passage side in said EGR system when unburned fuel is supplied to exhaust gas.

3. The exhaust gas purification system of claim 2, wherein
said continuous regeneration-type diesel particulate filter device is one of
a continuous regeneration-type diesel particulate filter device in which an oxidation catalyst is provided in the upstream of said filter,
a continuous regeneration-type diesel particulate filter device in which an oxidation catalyst is supported on said filter, and
a continuous regeneration-type diesel particulate filter device in which a catalyst is supported on said filter and at the same time an oxidation catalyst is provided in the upstream of said filter, or a combination thereof.
